# EUROPEAN PATENT APPLICATION

(11) **EP 2 108 888 A1**
(43) Date of publication of application: **14.10.2009**
(21) Application number: 08006926.3
(22) Date of filing: 07.04.2008
(51) Int. Cl.: F23J 15/02, B01D 53/14

(54) **Carbon capture plant and power plant system**

(71) Applicant: SIEMENS AKTIENGESELLSCHAFT, 80333 München (DE)
(72) Inventor: Tjellander, Göran, 61230 Finspang (SE)

(57) **Abstract**

The invention relates to a carbon capture plant (80) and a power plant system. The carbon capture plant (80) comprises means (82) for receiving flue gases, an absorber (86) to absorb carbon from flue gases (84) using a solvent (88), a stripper (90) to strip carbon from the carbon rich solvent from the absorber (86) using heat, and means (92) to receive heat (94) from a cogeneration plant (60) to supply the heat required in the stripper (90).

## Description

The present invention relates to a carbon capture plant and power plant systems comprising a carbon capture plant.

Carbon capture is an approach to mitigate global warming by capturing carbon dioxide (CO₂) from large point sources such as fossil fuel power plants and storing it instead of releasing it into the atmosphere.

Capturing carbon from the exhaust stream of a coal fired power generation plant or a fossil fired gas turbine cogeneration or combined cycle cogeneration unit implies high costs, reduced power output and efficiency loss. The costs associated for the implementation of the carbon capture system are in the order of 80% of the cost of the power generation plant. Also there is a net 10-15% reduction in efficiency of the power plant. In addition there are added investment and capital costs.

Introducing carbon capturing in an existing fossil fired power generation plant implies even higher costs and efficiency reductions as the steam turbine is not initially designed for the large steam quantities required from the capture plant.

Commercially available post combustion carbon capture methods use a chemical solvent like Mono Ethanol Amine (MEA), Benfield, Puratreat, etc. to chemically bind carbon dioxide from the flue gas stream in a first step. In the second step the bound carbon dioxide is stripped from the carbon rich solvent, which requires a large amount of heat. This is done in the absorber and the stripper, also called regenerator.

In all alternatives above, the fundamental idea is first binding and then stripping carbon dioxide by using heat transferred to the stripper typically taken as steam at 4-5 bar (140-150°C) from a steam turbine extraction in a power generation plant.

It is an object of the present invention to improve carbon capture.

The above object is achieved by a carbon capture plant, comprising:
- means for receiving flue gases;
- an absorber to absorb carbon from flue gases using a solvent;
- a stripper to strip carbon from the carbon rich solvent from the absorber using heat, and
- means to receive heat from a cogeneration plant to supply the heat required in the stripper.

The underlying idea of the present invention is to combine two different power plant types operated with two different fuels and utilizing certain characteristics of both to achieve an optimal solution from the point of view of high level of carbon capture, high fuel efficiency, surplus power generation and total economy. The invention is combining the advantages of natural gas fired gas turbine cogeneration or combined cycle cogeneration plants with the advantages of coal fired power plants for the main purpose of cleaning the flue gas from the coal fired in an economical and efficient way. The advantages with the former are excellent fuel efficiency and extremely high power to heat ratio. The advantage of the latter, from a carbon capture point of view, is high flue gas carbon content and low oxygen as compared with the natural gas fired cogeneration plant, which makes it more suitable for carbon capture.

In a preferred embodiment of the present invention, the means for receiving flue gases is adapted to receive flue gases from a coal fired power plant and/or the cogeneration plant. The carbon capture plant can be supplied by flue gas from either the coal fired plant or the cogeneration plant. The flue gas from the coal fired plant is prioritized due to higher carbon content and hence more efficient use of the carbon capture plant investment. When the coal fired plant is not in operation due to forced outage or simply retirement, the cogeneration plant can continue operating with the carbon capture plant connected to the gas turbine based cogeneration plant exhaust. In this case the excess steam to the stripper is dumped to the condenser in the coal fired plant, or utilized in the cogeneration steam turbine if equipped with a condensing tail.

In a further preferred embodiment of the present invention, the power required for driving the capture plant is supplied from the cogeneration plant. The auxiliary objects that are electrically driven in the capture plant, or compressors needed for carbon dioxide compression and transport, can be run by the power from the cogeneration plant, which is possible due to the high power to heat ratio of the cogeneration plant. This means that the total plant is independent of external power supply and will not interfere with power distribution from/to the existing plant.

In a further preferred embodiment of the present invention the proposed carbon capture plant can be used in a power plant system which is a combination of a coal fired power plant and a cogeneration plant. The carbon capture plant is used to clean the flues gases from the coal fired plant, the necessary heat being the heat which is generated in the cogeneration plant anyway. Advantageously the heat to clean the flue gases has not to be supplied by the coal fired plant.

The present invention is further described hereinafter with reference to preferred embodiments shown in the accompanying drawings, in which:
FIG 1 is a flow diagram of a carbon capture plant,
FIG 2 is a schematic overview of a coal fired power plant combined with a carbon capture plant,
FIG 3 is a schematic overview of a natural gas fired gas turbine combined cycle cogeneration plant combined with a carbon capture plant,
FIG 4 shows a schematic view of the proposed carbon capture plant, and
FIG 5 shows a schematic overview of the proposed carbon capture plant combined with a carbon fired power plant and a natural gas fired combined cycle cogeneration plant.

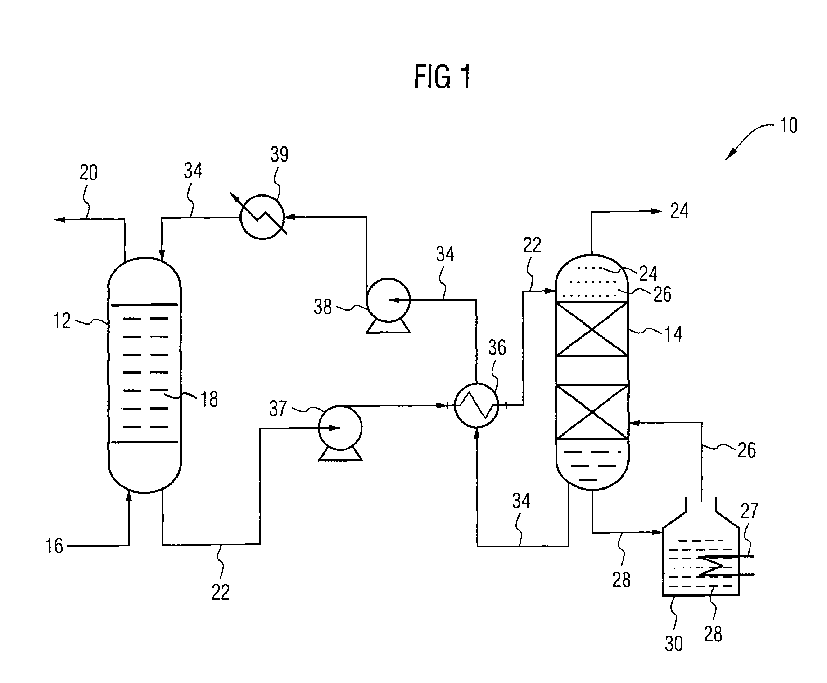

Referring to FIG 1, a flow diagram of a carbon capture plant 10 is shown. It comprises an absorber 12 and a stripper 14. Flue gas 16 from a power plant is the source of carbon dioxide. The flue gas 16 is cooled before it reaches the carbon capture plant 10 in order to optimize the process. The flue gases 16 are brought to the bottom of the absorber 12 which is filled with a packing material that offers a large surface that an absorption solvent 18 follows on its way down through the absorber 12 and the cleaned flue gases 20 are released from the top of the absorber 12. The solvent 18 absorbs the carbon dioxide in the flue gas 16 as it flows upwards through the absorber 12. After the carbon dioxide has been captured by the solvent 18, it has to be released by heating the solvent. This process is also called stripping. The carbon rich solvent 22 is transferred to the stripper 14. The stripping is done by allowing the carbon rich solvent 22 to flow down the packing material that fills the stripper 14, while solvent vapour 26 and carbon dioxide 24 flow upwards. Steam 27 from cogeneration plant is used to provide the heat required for the stripping process. The steam 27 from cogeneration plant transfers the necessary heat to the carbon rich solvent 22 via a reboiler 30 heat exchanger. The mixture of solvent vapour 26 and carbon dioxide 24 that exits the top of the stripper 14 is cooled down, and most of the solvent vapour 26 is condensed and the condensed solvent 28 to the reboiler 30 while the released carbon dioxide 24 remains in a gaseous phase and is extracted out from top of the stripper 14. The condensed solvent 28 is again converted into solvent vapour 26 for reuse in the reboiler 30 and sent back to the stripper 14. This reboiler 30 is the largest consumer of heat in the carbon dioxide separation process. A flow of virtually CO₂-free solvent called lean solvent solution 34 leaves the reboiler 30 and is led back to the absorber 12, where it once again absorbs carbon dioxide.

A heat exchanger 36 is used, which transfers heat from the lean solvent solution 34 leaving the stripper 14 to the rich solvent solution 22 coming from the absorber 12. Two hydraulic pumps are used, namely a rich solvent pump 37 and a lean solvent pump 38 to circulate the carbon rich solvent 22 from the absorber 12 to the stripper 14 and the lean solvent solution 34 from the stripper 14 to the absorber 12 respectively. The lean solvent solution 34 is cooled in a cooler 39 before being discharged to the absorber 12.

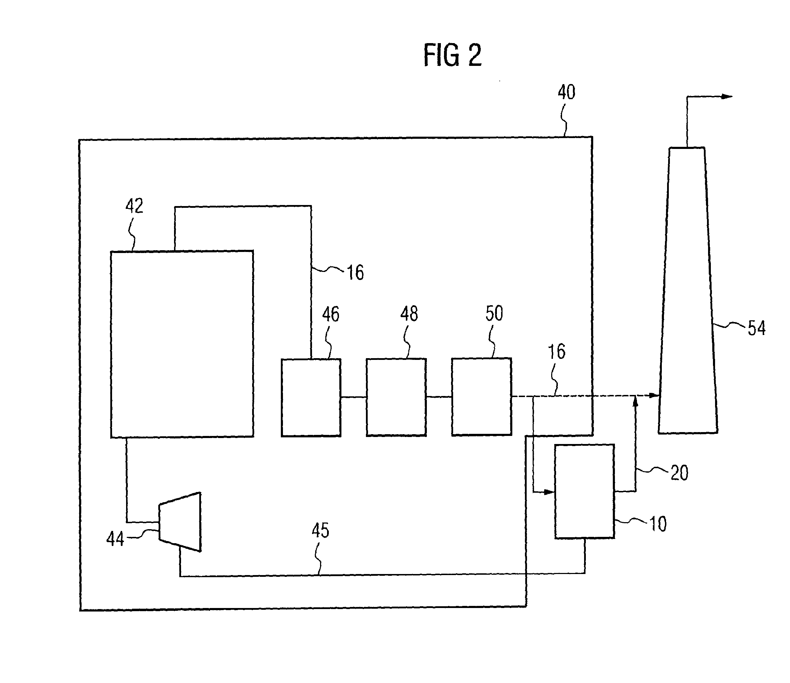

FIG 2 gives an overview of a coal fired power plant 40 combined with a carbon capture plant 10. A boiler 42 produces steam by burning coal and the steam is supplied to a steam turbine 44 for power generation. The extracted steam 45 from the steam turbine 44 is sent to the carbon capture plant 10. The flue gases 16 from the coal fired power plant 40 are cleaned before sending to the carbon capture plant 10. The flue gases 16 are typically made to pass through a Selective Catalytic Reduction stage (SCR) 46 for cleaning nitrogen oxides (NOₓ), a Flue Gas Desulphurizer (FGD) 48 for the removal of sulphur dioxides (SOₓ) and an Electro Static Precipitator (ESP) 50 for the removal of the precipitated matter. Cleaned flue gases 16 are then made to pass through the carbon capture plant 10 for carbon capture. The exhaust flue gas 20 from the carbon capture plant 10 is sent to a stack 51 from where it is discharged to the atmosphere.

Carbon capture in a coal fired power plant is advantageous because of the high flue gas carbon content (two times higher) and the low oxygen (three times lower) compared with the natural gas fired cogeneration plant. Heat required for stripping carbon dioxide from the solvent as needed for cleaning the flue gas from the coal plant usually is intended to be supplied as steam from the steam turbine of the coal fired power plant. But it requires modifications to the steam turbine and results in larger power output loss than the corresponding heat being supplied from the gas turbine based cogeneration plant. The power output decreases by almost 30-40 %.

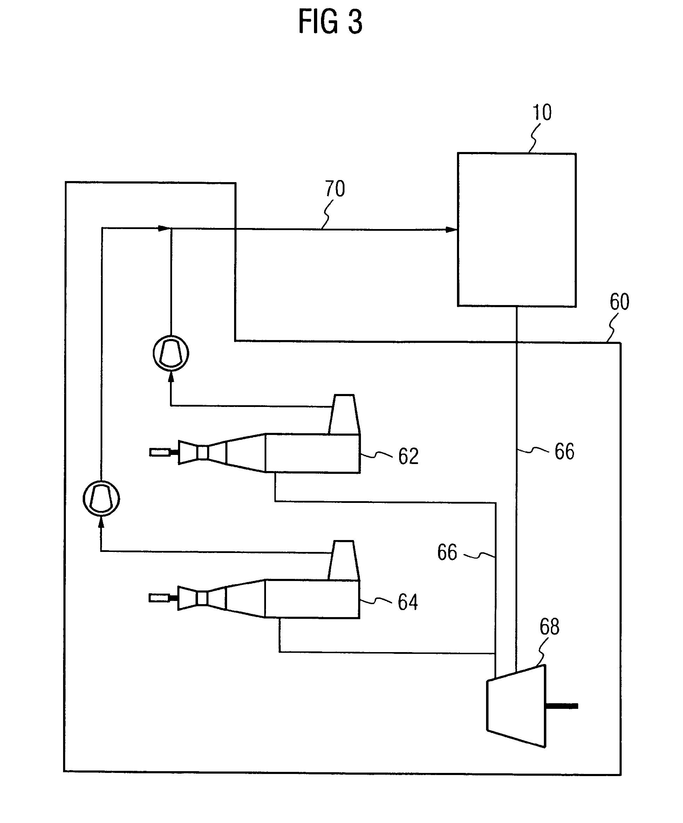

Referring to FIG 3 a natural gas fired gas turbine combined cycle cogeneration plant 60 combined with a carbon capture plant 10 is shown. Two Heat Recovery Steam Generators (HRSGs) 62, 64 each connected to a gas fired gas turbine supply steam 66 to a single steam turbine 68 for power generation. The exhaust flue gases 70 from the natural gas fired turbines 62, 64 are sent to the carbon capture plant 10. The steam 66 from the steam turbine 68 is also sent to the carbon capture plant 10.

Carbon capture from a natural gas fired turbine combined cogeneration cycle plant 60 is not of much advantage due to carbon lean flue gas (carbon dioxide content 5% by weight) and high oxygen content (15%) in the flue gases 70 which degrades the solvent of the carbon capture plant 10. Also there is no further local environment emission reduction (Precipitated matter, sulphur dioxides (SOₓ) and nitrogen oxides (NO_{X})) from the exhaust as for the coal fired plant because of the clean fuel used. Compared with carbon capture applied to a coal fired plant, the additional cost for applying carbon capture to a gas fired gas turbine based cogeneration plant will be substantially higher in relative numbers.

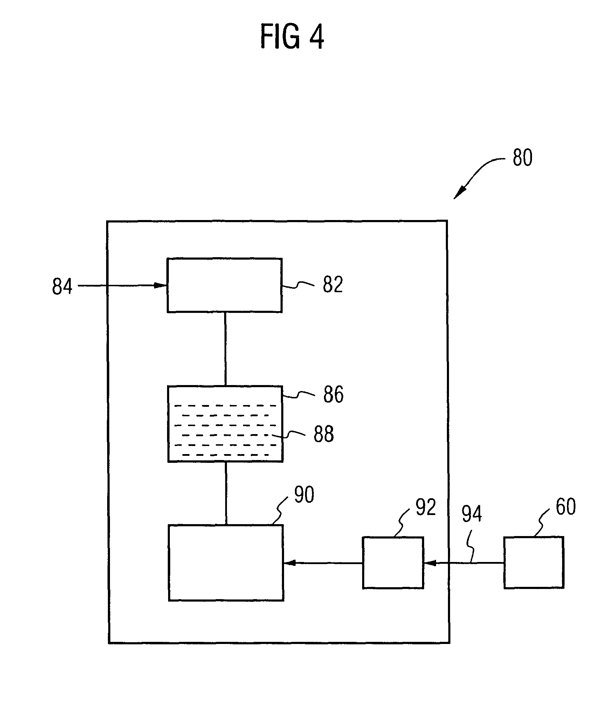

FIG 4 shows the schematic overview of a carbon capture plant 80 according to one embodiment of the present invention. It comprises means 82 for receiving flue gases 84, an absorber 86 to absorb carbon dioxide from the flue gases 84 using a solvent 88, a stripper 90 to strip carbon dioxide from the carbon rich solvent from the absorber using heat, and means 92 to receive heat 94 from a cogeneration plant 60 to supply the heat required in the stripper 90.

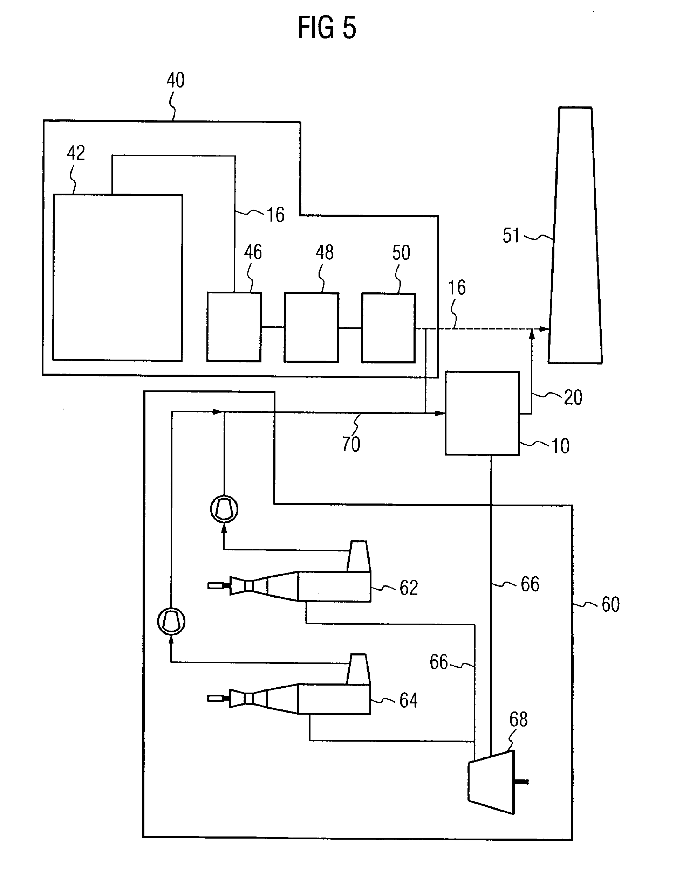

FIG 5 shows a schematic overview of a carbon capture plant 80 combined with a coal fired power plant 40 and a natural gas fired combined cycle cogeneration plant 60. The coal fired power plant 40 is same as shown in FIG 2 and the natural gas fired combined cycle cogeneration plant 60 is the same as shown in FIG 3.

The flue gases 16 from the coal fired power plant are typically cleaned of nitrogen oxides (NO_{X}), sulphur oxides (SO_{X}) and Precipitated Matter (PM) by making them pass through the SCR 46, the FGD 48 and the ESP 50 respectively. The clean flue gas is then fed to the carbon capture plant 80. The carbon capture plant 80 is also adapted to receive flue gas from either the coal fired plant or the natural gas turbine cogeneration plant. The flue gas from the coal fired plant is prioritized due to higher carbon content and hence more efficient use of the carbon capture plant investment.

The flue gases flow to the absorber 86 and then to the stripper 90 for the carbon capture process. The large amount of heat necessary for stripping carbon dioxide from the solvent 88 in the capture plants is supplied from the natural gas fired gas turbine cogeneration plant 60 in the form of steam 66 either coming from the Heat Recovery Steam Generator (HRSG) or directly from the steam turbine 68 exhaust or a turbine extraction if a combined cycle cogeneration plant is used.

To be fitted for both, the coal and cogeneration plant flue gas flow, the exhaust flow from the cogeneration plant has to be approximately similar to the flow from the coal plant (not to exceed the design flue gas velocity of the absorber). This means that a certain size of cogeneration plant is optimal. The optimum use of it also presumes that it generates as much heat as is required for the stripper. Due to the flexibility of a combined cycle cogeneration plant 60, the heat necessary for the stripper 90 can be regulated by supplementary firing in the Heat Recovery Steam Generator (HRSG) if heat is not large enough, or by regulating the steam turbine extraction if steam demand being lower than available.For operating the cogeneration plant 60 independent of the operation of the coal fired power plant 40 a small or medium gas turbine size, covering a large range of coal fired plants - from 50 to 500 MWe is fitted by multiplication of units and combined with Heat Recovery Steam Generator (HRSG) supplementary firing. This means that the degree of supplementary firing and steam extraction is regulated with respect to the operating conditions of the stripper, the solvent used or which of the two units are in operation.

The coal fired plant 40, including its condensing steam turbine, is not affected by this connection other than on the flue gas side, hence no modification to the condensing steam turbine is required which is essential in case of retrofitting existing coal fired power plants.

When the coal fired plant 40 is not in operation due to forced outage or simply retirement, the cogeneration plant 60 can continue operating with the capture plant 80 connected to the gas cogeneration plant exhaust. In this case the excess steam to the stripper 90 is dumped to the condenser in the coal fired plant, or utilized in the cogeneration steam turbine if equipped with a condensing tail.

Also in case of retrofit, the power required for driving the capture plant is supplied from the cogeneration plant, which also will avoid modifications and further output losses from the existing coal fired plant.

The fuel efficiency of a coal fired power plant is between 30-40% and the corresponding efficiency of the cogeneration plant 60 is approximately 90%. When generating both heat necessary for the typical carbon dioxide stripper 90 and power (power to heat ratio is 100% or higher for a combined cycle cogeneration plant) a substantial amount of surplus power will be generated.

The above combined power plant system will capture 90% of the carbon from the coal fired plant 40 (or 70% of the carbon from both units together) and give surplus power output in the order of 50 to 100% of the installed coal fired power generation. One could therefore say that the surplus power generation is carbon free as the removed carbon corresponds to the total carbon content in the cogeneration plant plus 100 % that much in the coal fired power plant.

Although the invention has been described with reference to specific embodiments, this description is not meant to be construed in a limiting sense. Various modifications of the disclosed embodiments, as well as alternate embodiments of the invention, will become apparent to persons skilled in the art upon reference to the description of the invention. It is therefore contemplated that such modifications can be made without departing from the spirit or scope of the present invention as defined.

## Claims

1. A carbon capture plant (80), comprising:
- means (82) for receiving flue gases(84);
- an absorber (86) to absorb carbon from flue gases (84) using a solvent (88);
- a stripper (90) to strip carbon from the carbon rich solvent from the absorber (86) using heat, and
- means (92) to receive heat from a cogeneration plant (60) to supply the heat (94) required in the stripper (90).

2. The carbon capture plant (80) according to claim 1, wherein the means (82) for receiving flue gases is adapted to receive flue gases (84) from a coal fired power plant (40) and/or the cogeneration plant (60).

3. The carbon capture plant (80) according to any of the preceding claims, wherein the power required for driving the capture plant is supplied from the cogeneration plant (60).

4. A power plant system comprising a combination of a coal fired power plant (40), a cogeneration plant (60) and the carbon capture plant (80) as claimed in any of the preceding claims.
